# EUROPEAN PATENT APPLICATION

(11) **EP 4 492 507 A1**
(43) Date of publication of application: **15.01.2025**
(21) Application number: 23788433.3
(22) Date of filing: 14.04.2023
(51) Int. Cl.: H01M 8/0223, H01M 8/0206, H01M 8/0215, H01M 8/0228, H01M 8/04, H01M 8/12, H01M 8/2475

(54) **ELECTROCONDUCTIVE MEMBER, ELECTROCHEMICAL CELL DEVICE, MODULE, AND MODULE ACCOMMODATION DEVICE**

(30) Priority: 15.04.2022 JP 2022067602
(71) Applicant: Kyocera Corporation, Kyoto-shi, Kyoto 612-8501 (JP)
(72) Inventor: HIGASHI, Masahiko, Kyoto-shi, Kyoto 612-8501 (JP)
(74) Representative: Viering, Jentschura & Partner mbB Patent- und Rechtsanwälte
(86) International application number: PCT/JP2023/015252
(87) International publication number: WO 2023/200016

(57) **Abstract**

An electrically conductive member includes a first portion and a second portion having a resistivity different from that of the first portion. An electrochemical cell device includes an electrically conductive member and an electrochemical cell connected to the electrically conductive member. The electrochemical cell includes a first part connected to the first portion, and a second part connected to the second portion. A temperature of the first part is higher than a temperature of the second part. A resistivity of the first portion is larger than a resistivity of the second portion.

## Description

### TECHNICAL FIELD

The present disclosure relates to an electrically conductive member, an electrochemical cell device, a module, and a module housing device.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2021-180164 A
Patent Document 2: JP 2015-220022 A

### SUMMARY

An electrically conductive member according to an aspect of an embodiment includes a first portion and a second portion having a resistivity different from that of the first portion.

An electrochemical cell device of the present disclosure includes the electrically conductive member described above and an electrochemical cell connected to the electrically conductive member. The electrochemical cell includes a first part connected to the first portion, and a second part connected to the second portion. A temperature of the first part is higher than a temperature of the second part. A resistivity of the first portion is larger than a resistivity of the second portion.

A module of the present disclosure includes the electrochemical cell device described above and a storage container housing the electrochemical cell device.

Further, a module housing device of the present disclosure includes the module described above, an auxiliary device for operating the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is an enlarged cross-sectional view of the electrochemical cell device according to the first embodiment.
FIG. 4 is a horizontal cross-sectional view illustrating an example of an electrically conductive member included in the electrochemical cell device according to the first embodiment.
FIG. 5 is a cross-sectional view taken along a line A-A illustrated in FIG. 4.
FIG. 6A is a cross-sectional view illustrating an example of the electrically conductive member included in the electrochemical cell device according to the first embodiment.
FIG. 6B is a cross-sectional view illustrating another example of the electrically conductive member included in the electrochemical cell device according to the first embodiment.
FIG. 6C is a cross-sectional view illustrating another example of the electrically conductive member included in the electrochemical cell device according to the first embodiment.
FIG. 6D is a cross-sectional view illustrating another example of the electrically conductive member included in the electrochemical cell device according to the first embodiment.
FIG. 7 is an exterior perspective view illustrating an example of a module according to the first embodiment.
FIG. 8 is an exploded perspective view schematically illustrating an example of a module housing device according to the first embodiment.
FIG. 9 is an enlarged cross-sectional view of an electrochemical cell device according to a second embodiment.
FIG. 10 is a top view illustrating an example of an electrochemical cell device according to a third embodiment.
FIG. 11 is a perspective view illustrating an example of an electrochemical cell included in an electrochemical cell device according to a fourth embodiment.
FIG. 12 is a perspective view illustrating an example of a temperature distribution in a flat plate-shaped electrochemical cell.
FIG. 13 is a vertical cross-sectional view illustrating an example of an electrically conductive member included in the electrochemical cell device according to the fourth embodiment.
FIG. 14 is a vertical cross-sectional view illustrating an example of an electrically conductive member included in an electrochemical cell device according to a fifth embodiment.
FIG. 15A is a horizontal cross-sectional view illustrating an example of an electrochemical cell included in an electrochemical cell device according to a sixth embodiment.
FIG. 15B is a horizontal cross-sectional view illustrating another example of the electrochemical cell included in the electrochemical cell device according to the sixth embodiment.
FIG. 15C is a horizontal cross-sectional view illustrating another example of the electrochemical cell included in the electrochemical cell device according to the sixth embodiment.
FIG. 16 is a diagram for comparing durability of electrochemical cell devices.

### DESCRIPTION OF EMBODIMENTS

In the known fuel cell stack device, there is a case where, for example, a variation in temperature occurs during power generation, and there is room for improvement in durability.

Thus, an electrically conductive member, an electrochemical cell device, a module, and a module housing device having high durability are desired to be provided.

Embodiments of an electrically conductive member, an electrochemical cell device, a module, and a module housing device disclosed in the present application will be described below in detail with reference to the accompanying drawings. Note that the disclosure is not limited by the following embodiments.

Note that the drawings are schematic and that the dimensional relationships between elements, the proportions of the elements, and the like may differ from the actual ones. Further, there may be differences between the drawings in the dimensional relationships, proportions, and the like.

### First Embodiment

### Electrochemical Cell

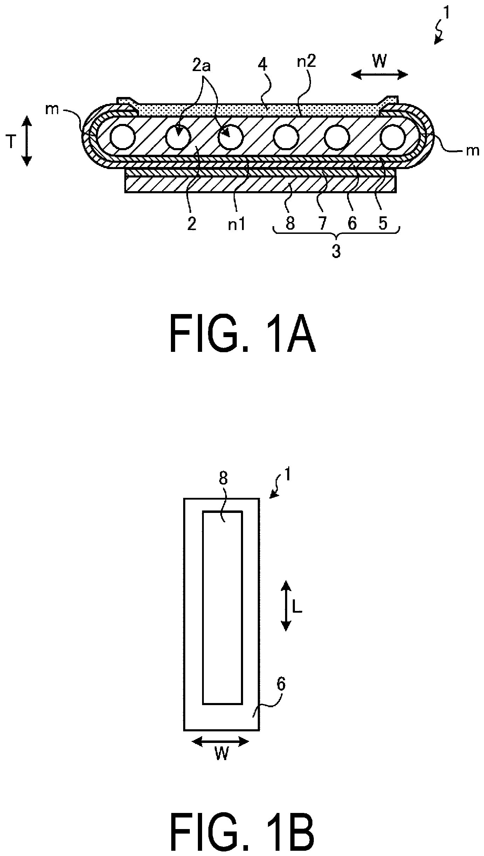

First, with reference to FIGs. 1A to 1C, an example of a solid oxide fuel cell will be described as an electrochemical cell constituting the electrochemical cell device according to the first embodiment. The electrochemical cell device may include a cell stack including a plurality of the electrochemical cells. The electrochemical cell device including the plurality of electrochemical cells is simply referred to as a cell stack device.

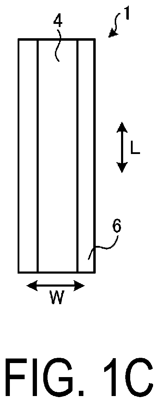

FIG. 1A is a horizontal cross-sectional view illustrating an example of an electrochemical cell according to an embodiment, FIG. 1B is a side view of the example of the electrochemical cell according to the embodiment when viewed from an air electrode side, and FIG. 1C is a side view of the example of the electrochemical cell according to the embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The thickness in a thickness direction T of the entire cell 1 is, for example, from 1 mm to 5 mm.

As illustrated in FIG. 1A, the cell 1 includes a support substrate 2 with electrical conductivity, an element portion 3, and an interconnector 4. The support substrate 2 has a pillar shape with a pair of facing flat surfaces n1, n2 and a pair of side surfaces m in a circular arc shape connecting the flat surfaces n1, n2.

The element portion 3 is provided on the flat surface n1 of the support substrate 2. The element portion 3 includes a fuel electrode layer 5, a solid electrolyte layer 6, and an air electrode layer 8. In the example illustrated in FIG. 1A, the interconnector 4 is located on the flat surface n2 of the cell 1. The cell 1 may include an intermediate layer 7 between the solid electrolyte layer 6 and the air electrode layer 8.

As illustrated in FIG. 1B, the air electrode layer 8 does not extend to the lower end of the cell 1. At the lower end portion of the cell 1, only the solid electrolyte layer 6 is exposed on a surface of the flat surface n1. As illustrated in FIG. 1C, the interconnector 4 may extend to the lower end of the cell 1. At a lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability and allows a fuel gas flowing through the gas-flow passages 2a to pass through to the fuel electrode layer 5. The support substrate 2 may be electrically conductive. The support substrate 2 having electrical conductivity collects electricity generated in the element portion 3 to the interconnector 4.

The material of the support substrate 2 includes, for example, an iron group metal component and an inorganic oxide. For example, the iron group metal component may be nickel (Ni) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode layer 5, a commonly known material may be used. As the fuel electrode layer 5, any of porous electrically conductive ceramics, for example, ceramics containing: ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia may include partially stabilized zirconia.

The solid electrolyte layer 6 is an electrolyte and delivers ions between the fuel electrode layer 5 and the air electrode layer 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide, calcium oxide, and magnesium oxide are in solid solution. The rare earth element oxide may contain, for example, one or more rare earth elements selected from Sc, Y, La, Nd, Sm, Gd, Dy, and Yb. The solid electrolyte layer 6 may include, for example, CeO₂ in which La, Nd, Sm, Gd, or Yb is in solid solution, BaZrO₃ in which Sc or Yb is in solid solution, or BaCeO₃ in which Sc or Yb is in solid solution.

The air electrode layer 8 has gas permeability. The open porosity of the air electrode layer 8 may be, for example, in the range from 20% to 50%, particularly from 30% to 50%.

The material of the air electrode layer 8 is not particularly limited as long as the material is commonly used for air electrodes. The material of the air electrode layer 8 may be, for example, an electrically conductive ceramic such as a so-called ABO₃-type perovskite oxide.

The material of the air electrode layer 8 may be, for example, a composite oxide in which strontium (Sr) and lanthanum (La) coexist in the A-site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion prevention layer. When an element such as strontium (Sr) contained in the air electrode layer 8 diffuses into the solid electrolyte layer 6, an electrical resistance layer such as, for example, SrZrOs is formed in the solid electrolyte layer 6. The intermediate layer 7 makes it difficult to diffuse Sr, thereby making it difficult to form SrZrO₃ and other oxides having electrical insulation properties.

The material of the intermediate layer 7 is not particularly limited as long as it generally helps prevent diffusion of elements between the air electrode layer 8 and the solid electrolyte layer 6. The material of the intermediate layer 7 may contain, for example, cerium oxide (CeO₂) in which rare earth elements other than cerium (Ce) are in solid solution. As such rare earth elements, for example, gadolinium (Gd), samarium (Sm), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite-type oxide (LaCrO₃-based oxide), a lanthanum strontium titanium-based perovskite-type oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air. A metal or an alloy may be used as the material of the interconnector 4.

### Electrochemical Cell Device

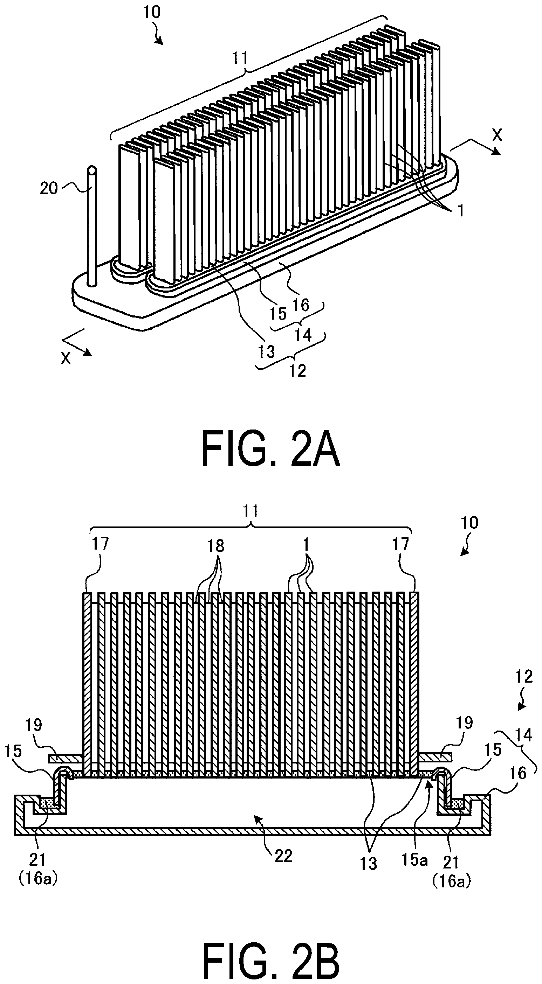

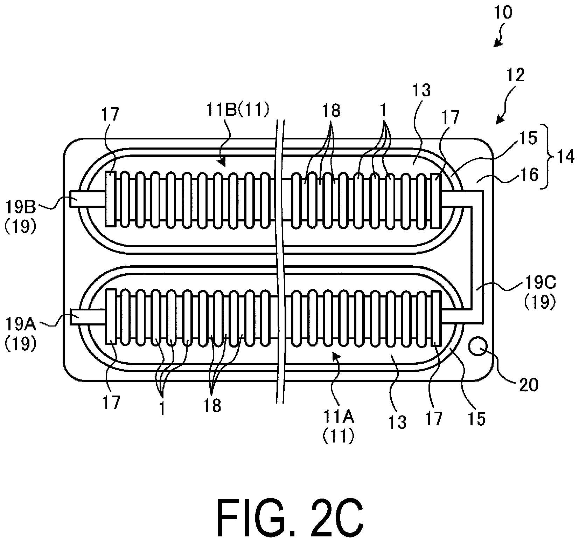

An electrochemical cell device according to the present embodiment using the cell 1 described above will be described with reference to FIGs. 2A to 2C. FIG. 2A is a perspective view illustrating an example of the electrochemical cell device according to the first embodiment, FIG. 2B is a cross-sectional view taken along a line X-X illustrated in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of metal and electrically conductive, for example.

The cell stack device 10 may include a fixing member 12a located so as to face the fixing member 12 with the cell stack 11 interposed therebetween. The fixing member 12 fixes lower end sides of the cells 1, and the fixing member 12a fixes upper end sides of the cells 1. Note that in FIGs. 2A to 2C, the fixing member 12a is not illustrated.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening through which a reactive gas is supplied to the plurality of cells 1 via the insertion hole 15a, and a recessed groove 16a located in the periphery of the opening. The outer peripheral end portion of the support body 15 is bonded to the gas tank 16 by a bonding material 21, with which the recessed groove 16a of the gas tank 16 is filled.

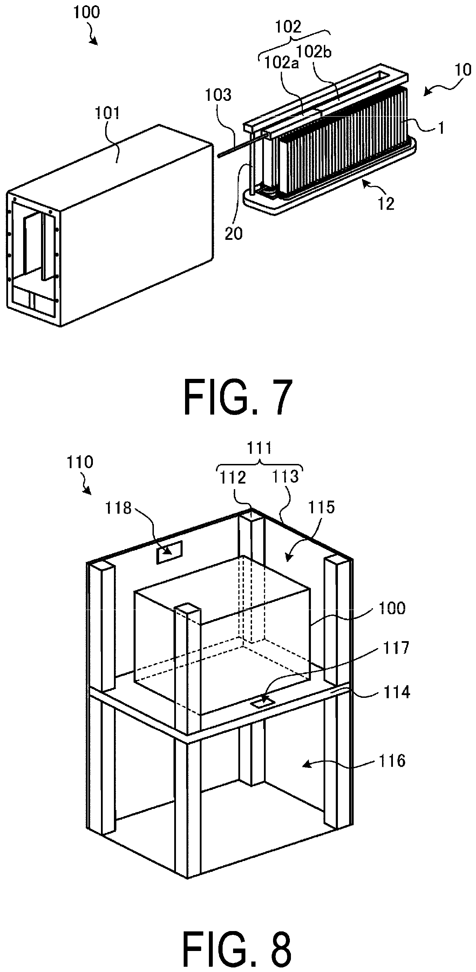

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20, is supplied from the gas tank 16 to the gas-flow passages 2a (see FIG. 1A) inside the cells 1, and is discharged from the upper end portion sides of the cells 1. The fuel gas supplied to the gas tank 16 is produced in a reformer 102 (see FIG. 7) which will be described later. When the cell stack device 10 includes the fixing member 12a, the fuel gas discharged from the upper end portion sides of the cells 1 to the fixing member 12a may be further discharged from a gas discharge pipe (not illustrated) and processed, or may be supplied to the cell stack 11 or a cell stack different from the cell stack 11 through the reformer again.

A hydrogen-rich fuel gas can be produced, for example, by steam-reforming a raw fuel. When the fuel gas is produced by steam-reforming, the fuel gas contains steam.

In the example illustrated in FIG. 2A, two rows of the cell stacks 11, and the support members 14 are included. The support member 14 includes the two support bodies 15 and the gas tank 16. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15. When the cell stack device 10 includes the fixing member 12a (not illustrated), like the support member 14, the support member 14a may include two support bodies and a gas tank. Although the cell stack device 10 including the two rows of cell stacks 11 is illustrated in the 2A, the cell stack device may include one row of cell stacks 11 or three or more rows of cell stacks 11.

The insertion hole 15a has, for example, an oval shape in a top surface view. The length of the insertion hole 15a in an arrangement direction of the cells 1, that is, the thickness direction T, is larger than the distance between two end current collection members 17 located at two ends of the cell stack 11, for example. The width of the insertion hole 15a is, for example, larger than the length of the cell 1 in the width direction W (see FIG. 1A).

As illustrated in FIG. 2B, a bonding portion between the inner wall of the insertion hole 15a and the lower end portion of each of the cells 1 is filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode layer 5 of one of the adjacent ones of the cells 1 with the air electrode layer 8 of the other one of the adjacent ones of the cells 1. More specifically, the electrically conductive member 18 connects the interconnector 4 electrically connected to the fuel electrode layer 5 of the one of the adjacent ones of the cells 1 and the air electrode layer 8 of the other one of the adjacent ones of the cells 1. When the interconnector 4 is made of a metal or an alloy, the interconnector 4 and the electrically conductive member 18 may be integrated with each other, or the electrically conductive member 18 may also serve as the interconnector 4. Details of the electrically conductive member 18 will be described later.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Electrically Conductive Member

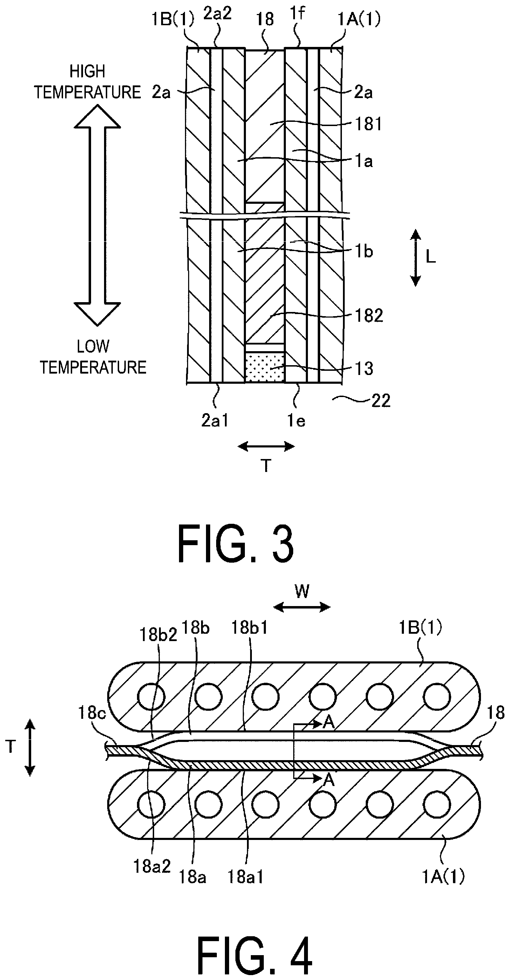

Subsequently, details of the electrically conductive member 18 included in the electrochemical cell device according to the first embodiment will be further described with reference to FIG. 3. FIG. 3 is an enlarged cross-sectional view of the electrochemical cell device according to the first embodiment. The cell stack device 10 illustrated in FIG. 3 corresponds to an enlarged view of the cell stack 11 included in the cell stack device 10 illustrated in FIG. 2B. In FIG. 3, for example, the cell 1 and the electrically conductive member 18 are illustrated by simplification. In addition, also in other drawings described later, components may be illustrated by simplification.

As illustrated in FIG. 3, the electrically conductive member 18 extending in the length direction is located between the cells 1 adjacent to each other in the thickness direction T. The cell 1 includes the gas-flow passages 2a through which the gas flows. The gas-flow passage 2a includes a supply port 2a1 and a discharge port 2a2. The fuel gas stored in the internal space 22 is supplied to the supply port 2a1. The discharge port 2a2 discharges the fuel gas from the inside of the cell 1.

In such a cell stack device 10, a variation in temperature may occur during power generation. Specifically, in the cell 1, the temperature rises higher in a part 1a of the cell 1 closer to the discharge port 2a2 side than in a part 1b of the cell 1 closer to the supply port 2a1 side. For this reason, in the part 1a of the cell 1, the temperature becomes higher than the temperature, for example, suitable for power generation, and the durability is likely to decrease.

Thus, in the present embodiment, the electrically conductive member 18 including a first portion 181 and a second portion 182 each having a different electrical resistivity is applied between the cells 1 adjacent to each other in the thickness direction T to reduce the temperature variation. Specifically, the electrically conductive member 18 is positioned such that the first portion 181 is connected to the part 1a and the second portion 182 is connected to the part 1b. The electrical resistivity of the first portion 181 is larger than the electrical resistivity of the second portion 182. Hereinafter, the electrical resistivity may be simply referred to as resistivity, and the electrical resistance may be simply referred to as resistance.

As a result, an energization amount is reduced more in the first portion 181 than in the second portion 182, and resistive heating in the first portion 181 is suppressed. As a result, temperature rise at the first portion 181 and the part 1a of the cell 1 connected to the first portion 181 is reduced more than at the second portion and the part 1b of the cell 1 connected to the second portion. Thus, according to the present embodiment, the durability of the electrically conductive member 18 and the cell stack device 10 is increased.

For example, the first portion 181 may be an end portion of the electrically conductive member 18 on the discharge port side, and the second portion 182 may be an end portion of the electrically conductive member 18 on the supply port side. With respect to a length 1 from the end portion of the electrically conductive member 18 on the discharge port side to the end portion of the electrically conductive member 18 on the supply port side, a portion away from the end portion of the electrically conductive member 18 on the discharge port side by 1/3 may be the first portion 181, and a portion away from the end portion of the electrically conductive member 18 on the supply port side by 1/3 may be the second portion 182.

The electrical resistance of the first portion 181 located between a cell 1A and a cell 1B may be larger than the electrical resistance of the second portion 182 located between the cell 1A and the cell 1B by, for example, 0.05 Ω or more. When a difference between the electrical resistance of the first portion 181 and the electrical resistance of the second portion 182 is 0.05 Ω or more, the energization amount of the first portion 181 is reduced, resistive heating in the first portion 181 is reduced, and the durability of the electrically conductive member 18 and the cell stack device 10 is increased.

A half of the electrically conductive member 18 located on the discharge port side may be the first portion 181, and a half located on the supply port side may be the second portion 182. With respect to the length 1 from the end portion of the electrically conductive member 18 on the discharge port side to the end portion on the supply port side, a portion from the end portion of the electrically conductive member 18 on the discharge port side to 1/3 may be the first portion 181, and a portion from the end portion of the electrically conductive member 18 on the supply port side to 1/3 may be the second portion 182. The resistivity of the first portion 181 may be larger than the resistivity of the second portion 182 by 0.8 Ω•m or more. When the resistivity of the first portion 181 is larger than the resistivity of the second portion 182 by 0.8 Ω•m or more, the energization amount supplied to the first portion 181 is significantly reduced. The resistivity may be an average value obtained by measuring, for example, any three or more points in each portion.

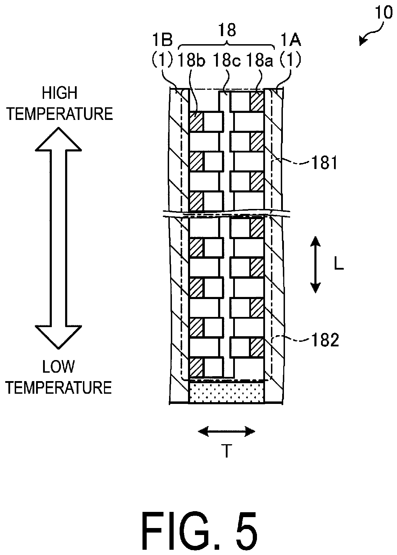

Here, an example of a specific configuration of the electrically conductive member 18 will be described with reference to FIGs. 4 and 5. FIG. 4 is a horizontal cross-sectional view illustrating an example of an electrically conductive member included in the electrochemical cell device according to the first embodiment.

As illustrated in FIG. 4, the electrically conductive member 18 includes a connecting portion 18a connected to the cell 1A that is one cell 1 of adjacent ones of the cells 1 and a connecting portion 18b connected to the cell 1B that is the other cell 1. The electrically conductive member 18 includes coupling portions 18c at both ends in the width direction W to connect the connecting portions 18a and 18b. This enables the electrically conductive member 18 to electrically connect the cells 1 adjacent to each other in the thickness direction T.

The connecting portions 18a and 18b include contact portions 18a1 and 18b 1 in contact with the cells 1A and 1B, respectively, and non-contact portions 18a2 and 18b2 not in contact with the cells 1A and 1B, respectively.

FIG. 5 is a cross-sectional view along a line A-A illustrated in FIG. 4. The electrically conductive member 18 extends in the length direction L of the cell 1. The electrically conductive member 18 has a comb-like shape in a cross-sectional view, and the connecting portions 18a and 18b alternately extend from the coupling portion 18c toward the cells 1A and 1B, respectively.

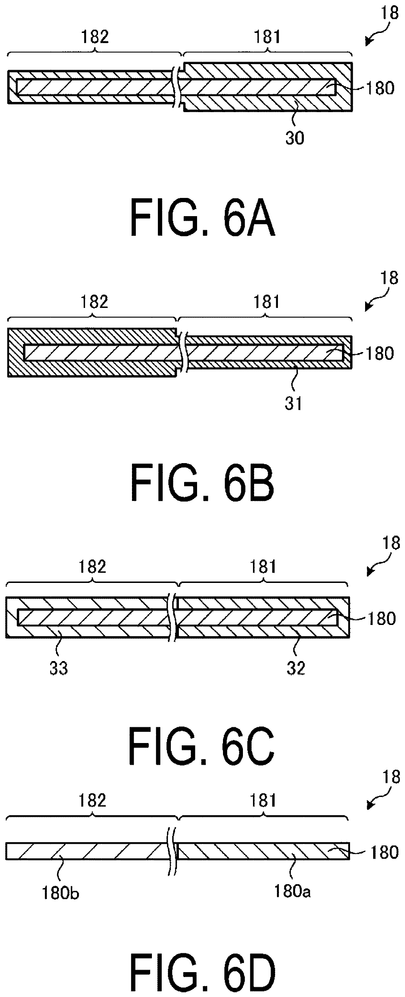

Next, specific examples of the electrically conductive member 18 including the first portion 181 and the second portion 182 will be described with reference to FIGs. 6A to 6D.

FIG. 6A is a cross-sectional view illustrating an example of the electrically conductive member included in the electrochemical cell device according to the first embodiment.

As illustrated in FIG. 6A, the electrically conductive member 18 may include a base member 180 and a coating film 30 covering the base member 180. The base member 180 has electrical conductivity and thermal resistance. The base member 180 contains chromium. The base member 180 is made of, for example, stainless steel. The base member 180 may contain, for example, a metal oxide.

The coating film 30 has electrical insulation properties or low electrical conductivity. The coating film 30 contains, for example, a chromium oxide (Cr₂O₃), an aluminum oxide (Al₂O₃), and a composite oxide containing Al and/or Si. The electrically conductive member 18 illustrated in FIG. 6A includes the first portion 181 and the second portion 182 each having a different resistivity by making the thicknesses of the coating films 30 different from each other. That is, the resistivity of the first portion 181 in which the thickness of the coating film 30 is larger than that of the second portion 182 is larger than the resistivity of the second portion 182.

FIGs. 6B to 6D are cross-sectional views illustrating other examples of the electrically conductive member included in the electrochemical cell device according to the first embodiment.

As illustrated in FIG. 6B, the electrically conductive member 18 may include the base member 180 and a coating film 31 covering the base member 180.

The coating film 31 has electrical conductivity. The coating film 31 contains, for example, an electrically conductive metal material and/or a metal oxide. As illustrated in FIG. 6B, the electrically conductive member 18 may include the first portion 181 and the second portion 182 with different resistivities by making the thicknesses of the coating films 31 different from each other. That is, the resistivity of the second portion 182 in which the thickness of the coating film 31 is larger than that of the first portion 181 is smaller than the resistivity of the first portion 181. The electrically conductive metal oxide contained in the coating film 31 may be, for example, a composite oxide having a spinel structure, for example, Zn(CoₓMn₁₋ₓ)₂O₄ (0 < x < 1) such as ZnMnCoO₄, Mn_{1.5}Co_{1.5}O₄, MnCo₂O₄, CoMn₂O₄, or the like. The electrically conductive metal oxide may be a so-called ABO₃ perovskite oxide.

The electrically conductive member 18 may include both the coating film 30 and the coating film 31 having higher electrical conductivity than the coating film 30. The electrically conductive member 18 may include, for example, the coating film 30 covering the base member 180 and further the coating film 31 covering the coating film 30. At this time, the thickness of the coating film 30 may be smaller in the second portion 182 than in the first portion 181. The thickness of the coating film 31 may be larger in the second portion 182 than in the first portion 181.

As illustrated in FIG. 6C, the electrically conductive member 18 may include the base member 180 and coating films 32 and 33 covering the base member 180.

The coating films 32 and 33 have electrical conductivity or electrical insulation properties. The coating film 32 may have higher electrical insulation properties than the coating film 33. The coating film 33 may have higher electrical conductivity than the coating film 32.

As illustrated in FIG. 6C, the electrically conductive member 18 may have the first portion 181 and the second portion 182 each having a different resistivity by making materials of the coating films 32 and 33 different from each other. That is, the resistivity of the second portion 182 including the coating film 33 having lower electrical insulation properties or higher electrical conductivity than the coating film 32 is lower than the resistivity of the first portion 181.

The coating films 32 and 33 may be the same material having different porosities. When the porosity of the coating film 32 is larger than the porosity of the coating film 33, the electrical insulation properties of the coating film 32 are higher than those of the coating film 33. When the porosity of the coating film 32 is larger than the porosity of the coating film 33, the electrical conductivity of the coating film 32 is lower than that of the coating film 33. The material of the coating films 32 and 33 may be a material contained in the coating films 30 and 31.

As illustrated in FIG. 6D, the electrically conductive member 18 may include portions 180a and 180b in which materials of the base member 180 are different from each other. The portion 180b has higher electrical conductivity than the portion 180a. As a result, the electrical resistivity of the second portion 182 is smaller than the electrical resistivity of the first portion 181.

Thus, the electrically conductive member 18 included in the electrochemical cell device according to the present embodiment may be produced by any method. The coating films 30 and 31 illustrated in FIGs. 6A and 6B, respectively, may be formed by changing the number of times of application and/or a concentration of a dip solution in a dipping method, or may be formed by changing a film-formation electrode in electrodeposition or a plating method. The coating films 32 and 33 illustrated in FIG. 6C may be formed by changing the type of dip solution in the dipping method, for example. The electrically conductive member 18 illustrated in FIG. 6D may be formed by, for example, welding or bonding.

### Module

A module 100 according to the present embodiment using the cell stack device 10 described above will be described with reference to FIG. 7. FIG. 7 is an exterior perspective view illustrating a module according to the first embodiment. FIG. 7 illustrates a state in which the front and rear surfaces, which constitute part of a storage container 101, are removed, and the fuel cell stack device 10 of the fuel cell stored inside is taken out rearward.

As illustrated in FIG. 7, the module 100 includes the storage container 101 and the cell stack device 10 stored in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. The reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

The fuel gas generated by the reformer 102 is supplied to the gas-flow passage 2a (see FIG. 1A) of the cell 1 through the gas circulation pipe 20 and the fixing member 12.

In the module 100 having the configuration mentioned above, the temperature in the module 100 during normal power generation is about from 500°C to 1000°C due to combustion of gas, power generation by the cell 1, and the like.

As described above, the module 100 includes the cell stack device 10 having high durability, so that the module 100 having high durability can be obtained.

### Module Housing Device

FIG. 8 is an exploded perspective view illustrating an example of a module housing device according to the first embodiment. A module housing device 110 includes an external case 111, the module 100 illustrated in FIG. 7, and an auxiliary device (not illustrated). The auxiliary device operates the module 100. The module 100 and the auxiliary device are contained within the external case 111. Note that, in FIG. 8, the configuration is partly not illustrated.

The external case 111 of the module housing device 110 illustrated in FIG. 8 includes a support 112 and an external plate 113. A dividing plate 114 vertically partitions the interior of the external case 111. The space above the dividing plate 114 in the external case 111 is a module housing room 115 for housing the module 100. The space below the dividing plate 114 in the external case 111 is an auxiliary device housing room 116 for housing the auxiliary device configured to operate the module 100. Note that, in FIG. 8, the auxiliary device housed in the auxiliary device housing room 116 is not illustrated.

The dividing plate 114 includes an air circulation hole 117 for causing air in the auxiliary device housing room 116 to flow into the module housing room 115 side. The external plate 113 constituting the module housing room 115 includes an exhaust hole 118 for discharging air inside the module housing room 115.

In the module housing device 110, the module housing device 110 having high durability can be obtained by providing the module 100 having high durability in the module housing room 115 as described above.

### Second Embodiment

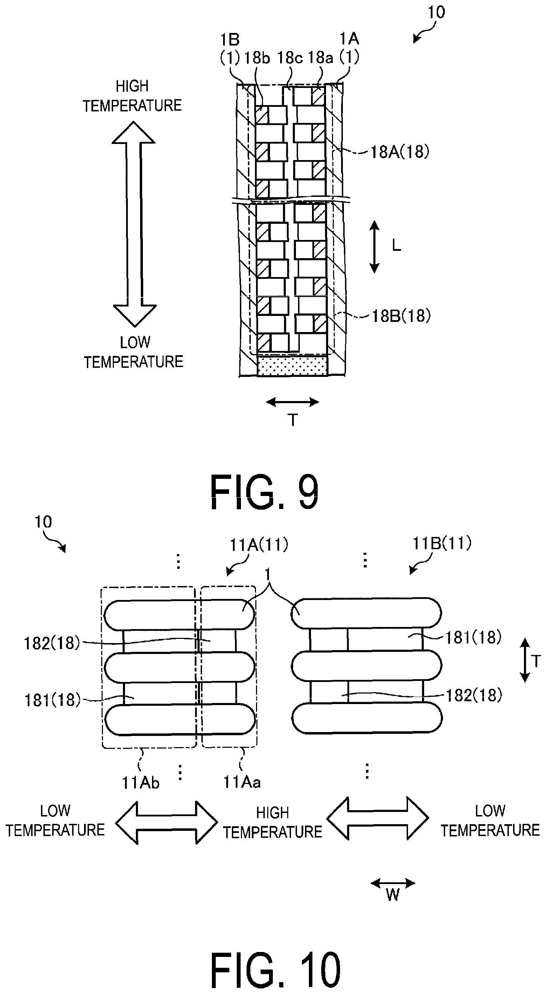

FIG. 9 is an enlarged cross-sectional view of an electrochemical cell device according to a second embodiment. The cell stack device 10 illustrated in FIG. 9 is different from the electrically conductive member 18 included in the cell stack device 10 according to the first embodiment described above in that a first electrically conductive member 18A and a second electrically conductive member 18B each having a different resistivity are included as the electrically conductive member 18. The resistivity of the second electrically conductive member 18B is smaller than the resistivity of the first electrically conductive member 18A, and the first electrically conductive member 18A and the second electrically conductive member 18B are disposed between the adjacent cells 1. As described above, even when the first electrically conductive member 18A and the second electrically conductive member 18B each having a different resistivity are used as the electrically conductive member 18, the temperature rise in the first electrically conductive member 18A and the part 1a of the cell 1 is reduced. Thus, according to the electrochemical cell device of the present embodiment, the durability of the electrically conductive member 18 and the cell stack device 10 is increased.

The first electrically conductive member 18A and the second electrically conductive member 18B can be produced in accordance with, for example, the first portion 181 and the second portion 182, respectively, illustrated in FIGs. 6A to 6D. The first electrically conductive member 18A and the second electrically conductive member 18B may be in contact with each other or may be separated from each other. When the first electrically conductive member 18A and the second electrically conductive member 18B are separated from each other, the current flowing through the first electrically conductive member 18A can be further reduced, and thus the durability of the electrically conductive member 18 and the cell stack device 10 is increased.

### Third Embodiment

FIG. 10 is a top view illustrating an example of an electrochemical cell device according to a third embodiment. A cell stack device 10 illustrated in FIG. 10 includes a cell stack 11 provided with a plurality of the cells 1 arranged in the thickness direction T (first direction). The cell stack 11 includes a cell stack 11A (first cell stack) and a cell stack 11B (second cell stack) adjacent to each other in a width direction W (second direction) of the cells 1.

As described above, in the cell stack device 10 including the cell stacks 11A and 11B, heat generated during power generation may be also confined between the cell stacks 11A and 11B, and a variation in temperature may occur in the cell stack device 10. Specifically, the temperature rises higher in a part 11Aa of the cell stack 11A closer to the cell stack 11B than in a part 11Ab side away from the cell stack 11B. For this reason, in the part 11Aa, the temperature becomes higher than the temperature, for example, suitable for power generation, and the durability is likely to decrease.

Thus, as illustrated in FIG. 10, the electrically conductive member 18 including the first portion 181 and the second portion 182 each having a different resistivity depending on the distance from the cell stack 11B may be applied between the cells 1 included in the cell stack 11A to reduce the temperature variation. Specifically, the electrically conductive member 18 is positioned such that the first portion 181 is connected to the cell 1 located in the part 11Aa and the second portion 182 is connected to the cell 1 located in the part 11Ab. The resistivity of the first portion 181 is larger than the resistivity of the second portion 182.

As a result, the energization amount is reduced more in the part 11Aa including the cell 1 connected to the first portion 181 than in the part 11Ab including the cell 1 connected to the second portion 182, and the temperature rise in the first electrically conductive member 18A and the part 11Aa is reduced. Thus, according to the electrochemical cell device of the present embodiment, the durability of the electrically conductive member 18 and the cell stack device 10 is increased.

### Fourth Embodiment

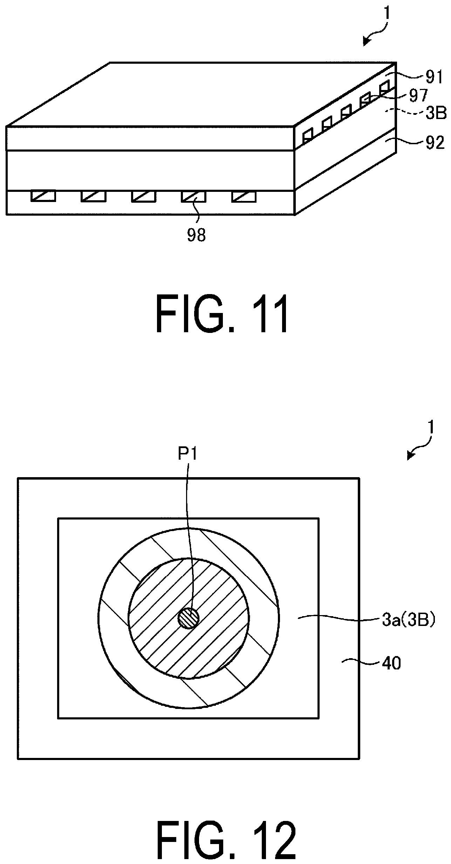

FIG. 11 is a perspective view illustrating an example of an electrochemical cell included in an electrochemical cell device according to a fourth embodiment. A cell 1 illustrated in FIG. 11 is a flat plate-shaped electrochemical cell including an element portion 3B, and electrically conductive members 91 and 92 sandwiching the element portion 3B. The element portion 3B includes a solid electrolyte layer (for example, the solid electrolyte layer 6), and a first electrode layer (for example, the fuel electrode layer 5) and a second electrode layer (for example, the air electrode layer 8) sandwiching the solid electrolyte layer. The electrically conductive members 91 and 92 include passages 97 and 98, respectively, through which a reactive gas flows, and are sealed by a sealing member (not illustrated) or the like.

FIG. 12 is a plan view illustrating an example of a temperature distribution in a flat plate-shaped electrochemical cell. As illustrated in FIG. 12, a separator 40 in contact with the electrically conductive members 91 and 92 is located around the element portion 3B. In a front surface 3a of the element portion 3B facing the electrically conductive member 91 or the electrically conductive member 92, a part closer to a center P1 of the element portion 3B becomes hotter during power generation of the cell 1, and the temperature decreases concentrically toward an outer edge side away from the center P1.

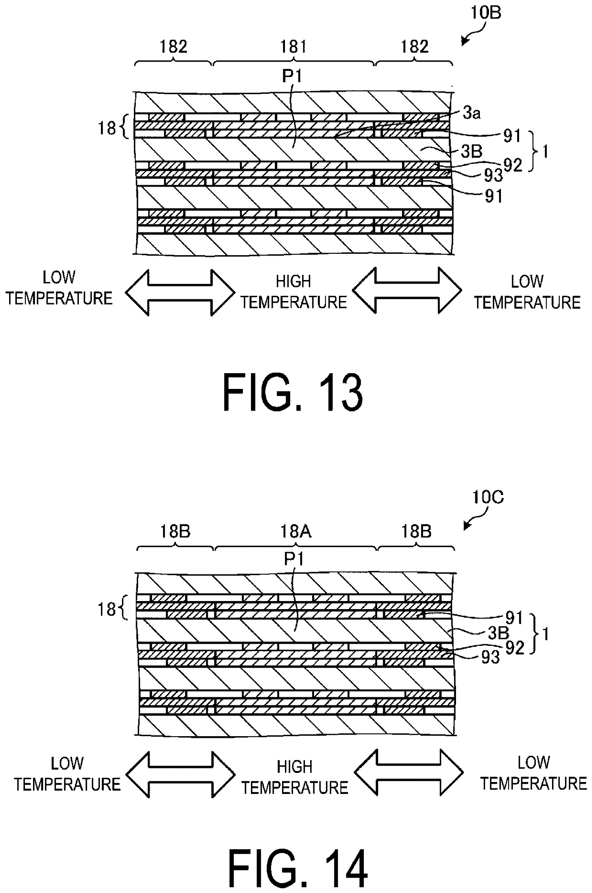

FIG. 13 is a vertical cross-sectional view illustrating an example of the electrically conductive member included in the electrochemical cell device according to the fourth embodiment. In a cell stack device 10B in which a plurality of cells 1 are stacked, an electrically conductive member 91 of one of the cells 1 adjacent to each other and an electrically conductive member 92 of the other of the cells 1 adjacent to each other are electrically connected to each other via an interconnector 93 which is an electrically conductive member. Hereinafter, the electrically conductive members 91 and 92 and the interconnector 93 located between the element portions 3B may be collectively referred to as the electrically conductive member 18.

As described above, near the center P1 of the element portion 3B that has become hot during power generation, the temperature is less likely to decrease. Thus, a variation in temperature may occur in the cell stack device 10. Specifically, in the cell 1, the temperature rises more and becomes, for example, higher than the temperature suitable for power generation in a part of the element portion 3B closer to the center P1 than in an outer edge side of the element portion 3B away from the center P1 to a temperature, and the durability is likely to decrease.

Thus, as illustrated in FIG. 13, the electrically conductive member 18 including the first portion 181 and the second portion 182 each having a different resistivity depending on the distance from the center P1 may be applied between the element portions 3B included in the cell stack device 10B to reduce the temperature variation. Specifically, the electrically conductive member 18 is positioned such that the first portion 181 is connected to the first electrode layer of the element portion 3B closer to the center P1 and the second portion 182 is connected to the first electrode layer of the element portion 3B away from the center P1. The resistivity of the first portion 181 is larger than the resistivity of the second portion 182.

As a result, the energization amount is reduced more in the part including the element portion 3B connected to the first portion 181 than in the part including the element portion 3B connected to the second portion 182, and the temperature rise in the first portion 181 and the part connected to the first portion 181 is reduced. Thus, according to the electrochemical cell device of the present embodiment, the durability of the electrically conductive member 18 and the cell stack device 10B is increased.

In the above description, the electrically conductive members 91 and 92 and the interconnector 93 are collectively described as the electrically conductive member 18. However, the interconnector 93 different from the electrically conductive member 91 and 92 may be applied as a third electrically conductive member, and the electrically conductive members 91 and 92 may be connected in parallel.

### Fifth Embodiment

FIG. 14 is a vertical cross-sectional view illustrating an example of an electrically conductive member included in an electrochemical cell device according to a fifth embodiment. As illustrated in FIG. 14, the cell stack device 10C may include the first electrically conductive member 18A and the second electrically conductive member 18B each having a different resistivity as the electrically conductive member 18. The resistivity of the second electrically conductive member 18B is smaller than the resistivity of the first electrically conductive member 18A, and the first electrically conductive member 18A and the second electrically conductive member 18B are disposed between the adjacent cells 1. As described above, even when the first electrically conductive member 18A and the second electrically conductive member 18B each having a different resistivity are used as the electrically conductive member 18, the temperature rise in the first electrically conductive member 18A and the part of the cell 1 connected to the first electrically conductive member 18A is reduced. Thus, according to the electrochemical cell device of the present embodiment, the durability of the electrically conductive member 18 and the cell stack device 10C is increased.

### Sixth Embodiment

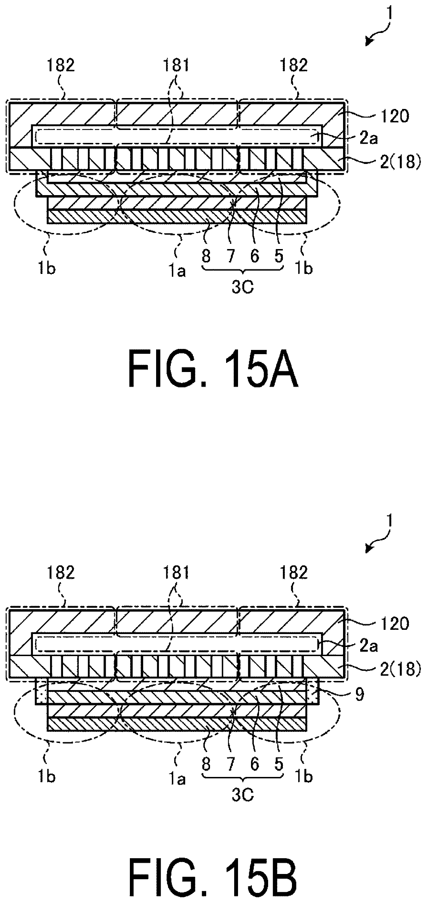

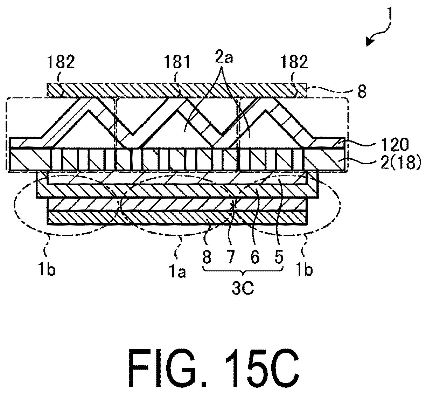

FIG. 15A is a horizontal cross-sectional view illustrating an example of an electrochemical cell included in an electrochemical cell device according to a sixth embodiment. FIGs. 15B and 15C, is a horizontal cross-sectional view illustrating another example of the electrochemical cell included in the electrochemical cell device according to the sixth embodiment.

As illustrated in FIGs. 15A to 15C, a cell 1 includes an element portion 3C in which a fuel electrode layer 5, a solid electrolyte layer 6, an intermediate layer 7, and an air electrode layer 8 are layered, and a support substrate 2. The support substrate 2 includes through holes or fine holes at a portion in contact with the fuel electrode layer 5 of the element portion 3C, and has a member 120 located outside the gas-flow passage 2a. The support substrate 2 allows gas to flow between the gas-flow passage 2a and the element portion 3C. The support substrate 2 may include, for example, one or more metal plates. A material of the metal plate may contain chromium. The metal plate may include an electrically conductive coating layer. The support substrate 2 is an electrically conductive member electrically connecting the adjacent ones of the cells 1 to each other. The element portion 3C may be directly formed on the support substrate 2 or may be bonded to the support substrate 2 by a bonding material.

In the example illustrated in FIG. 15A, the side surface of the fuel electrode layer 5 is covered with the solid electrolyte layer 6 to hermetically seal the gas-flow passage 2a through which the fuel gas flows. As illustrated in FIG. 15B, the side surface of the fuel electrode layer 5 may be covered and sealed with a dense sealing material 9 containing glass or ceramic. The sealing material 9 covering the side surface of the fuel electrode layer 5 may have electrical insulation properties.

The gas-flow passage 2a of the support substrate 2 may be made of the member 120 having unevenness as illustrated in FIG. 15C.

In the sixth embodiment, the member 120 is bonded to the air electrode layer 8 of the other cell 1 of the adjacent ones via another electrically conductive member such as an inter-cell connecting member and a bonding material. Note that the member 120 may be in direct contact with the air electrode layer 8 of the other cell 1 without the intervention of other electrically conductive members or the like.

Also in the sixth embodiment, the support substrate 2 (the electrically conductive member 18) includes the first portion 181 and the second portion 182 each having a different resistivity. In the support substrate 2 (electrically conductive member 18), as in the electrochemical cell devices according to the first to fourth embodiments, the first portion 181 may be positioned in the part 1a of the cell 1 having a high temperature, and the second portion 182 may be positioned in the part 1b of the cell 1 having a relatively low temperature. The resistivity of the first portion 181 is larger than the resistivity of the second portion 182, and thus the energization amount is reduced more in the part 1a of the cell 1 connected to the first portion 181 than in the part 1b connected to the second portion 182, and the temperature rise in the first portion 181 and the part 1a is reduced. Thus, according to the electrochemical cell device of the present embodiment, the durability of the support substrate 2 (electrically conductive member 18) and the cell stack device 10 is increased. In FIGs. 15A to 15C, as the part 1a of the cell 1 having a high temperature, the part closer to the center of the element portion 3C is illustrated as in the second embodiment. However, for example, as in the first embodiment, the part closer to the fuel gas discharge port side may be the part 1a of the cell 1 having a high temperature.

### EXAMPLE

### Experimental Example 1

The cell stack device 10 (cell stack 11) illustrated in FIG. 5 was produced. The size of the cell 1 was 170 mm (length direction L) × 27 mm (width direction W) × 2.3 mm (thickness direction T), having a hollow flat plate shape. The shape of the electrically conductive member 18 was a comb-like shape as illustrated in FIGs. 4 and 5, and the first portion 181 and the second portion 182 had the same shape. Specifically, the electrically conductive member 18 was produced such that the contact surface area between the cell 1 and the connecting portions 18a and 18b was 21 mm × 0.8 mm × 60 pieces, of which 30 pieces were the first portions 181 and 30 pieces were the second portions 182. The electrically conductive member 18 illustrated in FIG. 6A was used. The number of the cells 1 included in the cell stack 11 was 32, and the temperature difference was evaluated for the cell 1 located in the center part of the cell stack 11. The temperature of the cell 1 was measured by placing a thermocouple at each of parts of the cell 1 corresponding to the first portion 181 and the second portion 182, respectively, where the first portion 181 was a position about 1/3 away from the end portion on the discharge port side and the second portion 182 was a position about 1/3 away from the end portion on the supply port side, based on the length l of the electrically conductive member 18 in the length direction L.

### Experimental Example 2

The temperature difference was evaluated in the cell 1 located in the center part of the cell stack 11 produced in the same manner as in Experimental Example 1 except that the cell stack device 10 illustrated in FIG. 9 was used instead of the cell stack device 10 illustrated in FIG. 5.

### Experimental Example 3

The temperature difference was evaluated in the cell 1 located in the center part of the cell stack 11 produced in the same manner as in Experimental Example 1 except that the electrically conductive member 18 having a uniform resistivity was used instead of the cell stack device 10 illustrated in FIG. 5.

### Experimental Example 4

The cell stack device 10B illustrated in FIG. 13 was produced. The size of the cell 1 was 200 mm × 200 mm × 3.2 mm. The shape of the electrically conductive member 18 was such that the first portion 181 (140 mm × 140 mm) and the second portion 182 (the remaining portion excluding the first portion 181) had the same contact surface area. The number of cells 1 included in the cell stack device 10B was 20, and the temperature difference was evaluated in the cell 1 located in the center part of the cell stack device 10B. The temperature of the cell 1 was measured by placing the thermocouple at each of a part 30 mm away from the center P1 and a part 80 mm away from the center P.

### Experimental Example 5

Instead of the cell stack device 10B illustrated in FIG. 13, the cell stack device 10C illustrated in FIG. 14 was produced in the same manner as in Experimental Example 4, and the temperature difference was evaluated in the cell 1 located in the center part of the cell stack device 10C.

### Experimental Example 6

The temperature difference was evaluated in the cell 1 located in the center part of the cell stack device produced in the same manner as in Experimental Example 4 except that the electrically conductive member 18 having a uniform resistivity was used instead of the cell stack device 10B illustrated in FIG. 13.

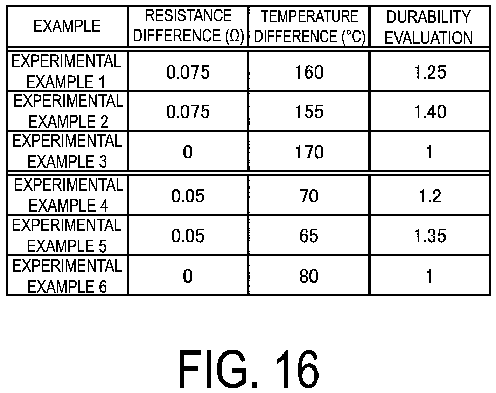

FIG. 16 is a diagram for comparing durability of electrochemical cell devices. Acceleration testing was performed in a case where the temperature of the fuel gas supplied into the cell was set to each test temperature of 950°C, 900°C, and 850°C, and the times until the voltage drop amounts, respectively, from the initial value reached 10% were measured. Specifically, the current density of each cell stack device set at a respective one of test temperatures was adjusted to 0.4 A/cm², and the temperature of each cell stack device was decreased from the test temperature to 750°C every 100 hours to perform voltage measurement. After the voltage measurement, each cell stack device was again set to the test temperature and the acceleration testing was continued. At each test temperature, an acceleration factor was calculated from the time required for the measured voltage to decrease to a value lower than the initial value by 10%, and the time required for the voltage to decrease to a value lower than the initial value by 10% (durability time) was estimated when the device was continuously operated at 750°C. In FIG. 16, the durability was evaluated by calculating relative values of the durability time based on Experimental Examples 3 and 6, respectively.

As illustrated in FIG. 16, in both Experimental Examples 1 and 2, the durability was improved as compared with Experimental Example 3. In both Experimental Examples 4 and 5, the durability was improved as compared with Experimental Example 6. As described above, according to the electrically conductive member 18 of each embodiment, the durability was improved, and the durability of the cell stack using the electrically conductive member 18 was also improved.

### Other Embodiments

In the embodiments described above, the fuel cell, the fuel cell stack device, the fuel cell module, and the fuel cell device have been exemplified as examples of the "battery chemical cell", the "battery chemical cell device", the "module", and the "module housing device". Alternatively, however, an electrolytic cell, an electrolytic cell stack device, an electrolytic module, and an electrolytic device may be provided. The electrolytic cell includes a first electrode layer and a second electrode layer, and decomposes water vapor into hydrogen and oxygen or decomposes carbon dioxide into carbon monoxide and oxygen by supplying electric power. According to such an electrolytic cell, an electrolytic cell stack device, an electrolytic module, and an electrolytic device, durability is increased.

While the present disclosure has been described in detail, the present disclosure is not limited to the aforementioned embodiments, and various changes, improvements, and the like can be made without departing from the gist of the present disclosure.

As described above, the electrically conductive member 18 according to the embodiments includes the first portion 181 and the second portion 182 having a resistivity different from the first portion 181. As a result, the electrically conductive member 18 having high durability can be provided.

The electrochemical cell device (for example, the cell stack device 10) of the present disclosure includes the electrically conductive member 18 described above and the electrochemical cell (for example, the cell 1) connected to the electrically conductive member 18. The electrochemical cell includes the first part (for example, part 1a) connected to the first portion 181 and the second part (for example, part 1b) connected to the second portion 182. The temperature of the first part is higher than the temperature of the second part, and the resistivity of the first portion 181 is larger than the resistivity of the second portion 182. As a result, the electrochemical cell device having high durability can be provided.

The electrochemical cell device (for example, the cell stack device 10C) of the present disclosure includes the solid electrolyte layer, the electrochemical cell (for example, the cell 1), the first electrically conductive member 18A, and the second electrically conductive member 18B. The second electrically conductive member 18B is separated from the first electrically conductive member 18A. The resistivity of the first electrically conductive member 18A is different from the resistivity of the second electrically conductive member 18B. As a result, the electrochemical cell device having high durability can be provided.

The module 100 of the present disclosure includes the electrochemical cell device described above and the storage container 101 housing the electrochemical cell device. Thus, the module 100 having high durability can be obtained.

The module housing device 110 of the present disclosure includes the module 100 described above, an auxiliary device configured to operate the module 100, and the external case 111 configured to accommodate the module 100 and the auxiliary device. Thus, the module housing device 110 having high durability can be obtained.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
10 Cell stack device
11 Cell stack
12 Fixing member
13 Fixing material
14 Support member
15 Support body
16 Gas tank
17 End current collection member
18 Electrically conductive member
100 Module
110 Module housing device
181 First portion
182 Second portion

## Claims

1. An electrically conductive member comprising:
a first portion; and
a second portion having a resistivity different from a resistivity of the first portion.

2. An electrochemical cell device comprising:
the electrically conductive member according to claim 1; and
an electrochemical cell connected to the electrically conductive member, and comprising:
a first part connected to the first portion; and
a second part connected to the second portion, wherein
a temperature of the first part is higher than a temperature of the second part, and
a resistivity of the first portion is larger than a resistivity of the second portion.

3. An electrochemical cell device comprising:
the electrically conductive member according to claim 1; and
an electrochemical cell connected to the electrically conductive member, and comprising a supply port configure to supply a reactive gas and a discharge port configure to discharge the reactive gas, wherein
the first portion is connected to a part of the electrochemical cell located near a side of the discharge port,
the second portion is connected to a part of the electrochemical cell located near the supply port, and
a resistivity of the first portion is larger than a resistivity of the second portion.

4. An electrochemical cell device comprising:
a cell stack comprising:
a plurality of electrochemical cells arranged in a first direction and
the electrically conductive member according to claim 1 configured to electrically connect the plurality of electrochemical cells, wherein
the cell stack further comprises:
a first cell stack; and
a second cell stack adjacent to the first cell stack in a second direction intersecting the first direction,
in the first cell stack, the first portion is connected to a part of the electrochemical cell located near the second cell stack,
the second portion is connected to a part of the electrochemical cell located near the second cell stack, and
a resistivity of the first portion is larger than a resistivity of the second portion.

5. An electrochemical cell device comprising:
the electrically conductive member according to claim 1; and
an electrochemical cell connected to the electrically conductive member, and comprising an element portion facing to the electrically conductive member, wherein
the first portion is connected near a center part of the element portion,
the second portion is connected near an outer edge of the element portion away from the center part of the element portion, and
a resistivity of the first portion is larger than a resistivity of the second portion.

6. An electrochemical cell device comprising:
an electrochemical cell comprising
a solid electrolyte layer, and
a first electrode layer and a second electrode layer sandwiching the solid electrolyte layer;
a first electrically conductive member connected to the first electrode layer; and
a second electrically conductive member connected to the first electrode layer and separated from the first electrically conductive member, wherein
a resistivity of the first electrically conductive member is different from a resistivity of the second electrically conductive member.

7. The electrochemical cell device according to claim 6, further comprising:
a third electrically conductive member connecting the first electrically conductive member and the second electrically conductive member in parallel to each other.

8. A module comprising:
the electrochemical cell device according to any one of claims 2 to 7; and
a storage container configured to house the electrochemical cell device.

9. A module housing device comprising:
the module according to claim 8;
an auxiliary device configured to operate the module; and
an external case configured to house the module and the auxiliary device.
